Europäisches Patentamt

European Patent Office

Office européen des brevets

(11) Publication number: **0 398 647**
**A2**

## (12) EUROPEAN PATENT APPLICATION

(21) Application number: **90305220.7**

(22) Date of filing: **15.05.90**

(51) Int. Cl.⁵: **G06F 9/44, G06F 9/445**

(30) Priority: **15.05.89 US 352801**

(43) Date of publication of application:
**22.11.90 Bulletin 90/47**

(84) Designated Contracting States:
**BE CH DE ES FR GB IT LI NL SE**

(71) Applicant: **International Business Machines
Corporation
Old Orchard Road
Armonk, N.Y. 10504(US)**

(72) Inventor: **Beckham, Larry W.
3220 Duval Road No. 704
Austin, Texas 78759(US)**
Inventor: **Dea, Ya-Wei Eva
10501 Glass Mountain Trail
Austin, Texas 78750(US)**
Inventor: **Gibson, Michael Clark**

**8504 Potosi Cove
Austin, Texas 78717(US)**
Inventor: **Jones, Linda Ann
1341 N. Meadow Creek Cr., No. 278
Irving, Texas 75038(US)**
Inventor: **Killebrew, Alice June
P.O. Box 156, Stirrup Drive
Buchanan Dam, Texas 78609(US)**
Inventor: **Mann, Charles Franklin
12016 Ladrido Lane
Austin,Texas 78727(US)**
Inventor: **Rauschuber, Wayne Edward
11610 Sweetshade Lane
Austin,Texas 78759(US)**

(74) Representative: **Bailey, Geoffrey Alan
IBM United Kingdom Limited Intellectual
Property Department Hursley Park
Winchester Hampshire SO21 2JN(GB)**

(54) Installing software on an information processing system.

(57) An information processing (10) system utilizes a custom install diskette to install software such as a multitasking operating system thereon. The multitasking operating system includes a base operating system and a plurality of separately installable components (52,54,56). The custom install diskette includes a plurality of system independent files which informs the information processing system of the components, features and options to be installed thereon. A custom install program determines a machine type which is associated with the information processing system and then installs only the code relating to the component, features, options and machine type thereon. Moreover, a configuration file associated with the base operating system is updated in regards to the machine type and the components, features and options installed on the information processing system.

FIG. 2

Xerox Copy Centre

# INSTALLING SOFTWARE ON AN INFORMATION PROCESSING SYSTEM

This invention relates to installing software on an information processing system and more particularly to customizing the installation of software having a plurality of separately installable components.

Known software such as a multitasking operating system may include a base operating system, a communication component, a database component and a LAN component whereby each component is separately installable from each other as well as from the base operating system. The base operating system is installed first and then the communication, database and LAN components are installed by an end user utilizing separate processes. Moreover, each of the components includes a plurality of features and options which may be selectively installed. Generally, the installation of the multitasking operating system requires the user to be familiar with the installation and configuration terminology of the various installation programs associated with each of the components and/or have an extensive set of worksheets to assist in completing the time consuming installation and configuration task. This process becomes very confusing when the multitasking operating system is installed in a large network environment whereby the various end users within the network generally are not familiar with the various installation procedures associated with the base operating system and the components associated therewith. This process is confusing, time consuming, difficult to complete, and results in installation errors.

Viewed from a first aspect the invention provides a method of installing software including a base system and a plurality of separately installable components, on an information processing system (10), comprising the steps of:
determining, from a custom install diskette, which of said components have been selected for installation on said information processing system; and
installing, for each of said selected components, features and options specified on said custom install diskette on said information processing system.

This invention relates to installing software such as a multitasking operating system having a base operating system and a plurality of separately installable components on an information processing system provides a custom install diskette, which includes at least a selected one of the components and selected features and options associated therewith. The information processing system accesses the custom install diskette to determine which of the components are to be installed thereon. Moreover, the custom install diskette includes a plurality of system independent or generic files which set forth the features and options associated with the at least one component to be installed on the information processing system. Thereafter, a component install program determines a machine type associated with the information processing system. In response to the generic files stored on the custom install diskette and the machine type, only the components, features and options specified on the custom install diskette and associated with the type of information processing system are installed on the information processing system.

Viewed from a second aspect the invention provides an information processing system having means for installing software including a base system and a plurality of separately installable components, comprising a data reading device (26) for reading said components, control logic (12,14,16,18) for determining, from a custom install diskette, which of said components have been selected for installation on said information processing system; and
file loading logic (12,14,16,18) for installing, for each of said selected components, features and options specified on said custom install diskette on said information processing system.

An embodiment of the invention will now be described, by way of example only, with reference to the accompanying drawings in which:
Fig. 1 is a block diagram of an information processing system on which an embodiment of the present invention may be employed.

Fig. 2 is a flow diagram of a custom build process in accordance with certain principles of an embodiment of the invention.

Fig. 3 is a flow diagram of a custom install process in accordance with certain principles of the embodiment of the invention.

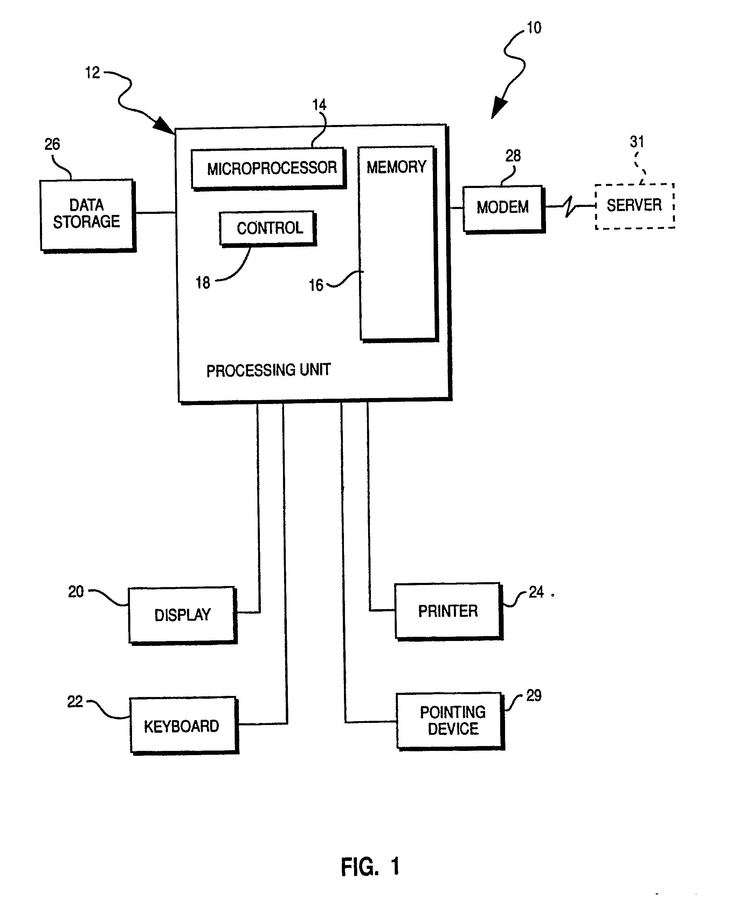

Referring to Fig. 1, there is shown a computer system 10 on which the present invention may be employed. System 10 includes a central processing unit 12 having a microprocessor 14, a memory system 16 and a control system 18 which functions to control input/output operations in addition to the interaction between the microprocessor and the memory system. System 10 also includes a group of conventional peripheral units including a display device 20, a keyboard 22, a printer 24, a data storage unit 26, a modem 28 and a pointing device or mouse 29. Since the details of the above described peripheral units form no part of the present invention and can be found in the prior art, only a brief functional description of each of the units will be set forth.

The central processing unit 12 corresponds to the "system unit" of a personal computer system such as an IBM AT or an IBM Personal Systems/2 computer system (IBM and Personal System/2 are trade marks of International Business Machines Corporation). The central processing unit 12 is provided with a multitasking operating system program such as the IBM Operating System/2 (Operating System/2 is a trade mark of International Business Machines Corporation) Extended Edition which is normally employed to run the selected computer system. The operating system program is stored in memory system 16 or in the data storage unit 26 along with one or more application programs which the user can select to be executed on the system 10. Depending on the capacity of the memory system 16 and the size of the application programs, portions of these programs, as needed, may be transferred to the memory system 16 from the data storage unit 26 which may include, for example, a hard disk drive and a diskette drive. The basic function of the data storage unit 26 is to store programs and data which are employed by the system 10 and which may readily be transferred to the memory system 16 when needed. The function of the diskette drive is to provide a removable storage function for entering programs and data into the system, and a vehicle for storing data in a form that is readily transportable for use on other computer systems.

Display device 20 and keyboard 22 together provide for an interactive operation of the computer system 10 wherein the interpretation that the computer system gives to a specific keystroke by the user depends, in substantially all situations, on what is being displayed to the user at that point in time. Additionally, interactive operation of the computer system 10 may also be provided by the display device 20 and the mouse 29, such as a mouse, wherein the interpretation that the computer system gives to a specific position of a cursor depends, in substantially all situations, on what is being displayed to the user at that point in time.

In certain situations, the user, by entering commands into the computer system 10, causes the system to perform a certain function. In other situations, the computer system 10 requests the entry of certain data, generally by displaying a prompt type of menu/message screen. Moreover, the computer system 10 may be controlled by positioning the cursor coincident with a selected item on the menu/screen or a control area associated with a primary window being displayed on the display device 20. The depth of the interaction between the user and the computer system 10 varies by the type of operating system and the application program, but is a necessary characteristic of the computer systems on which the method of the present invention may be employed.

As noted above, computer system 10 includes the printer 24 which functions to provide a hard copy output of data developed or stored in the computer system. The modem 28 functions to transfer data in an asynchronous manner from the computer system 10 to a host computer or server system 31 through one or more communication links which may be a commercial type link or a dedicated communications link.

In the preferred embodiment of the present invention, a multitasking operating system includes a base operating system, a communication component, a database component and a local area network (LAN) component. Hereinafter, the communication component will be referred to as a communication manager (CM), the database component will be referred to as a database manager (DB) and the LAN component will be referred to as a LAN requester (LR).

Moreover, the preferred embodiment of the present invention enables an administrator of computer network to predefine installation options to be utilized by network users. The administrator builds a custom install (CI) diskette to be used by the network user during the installation of the multitasking operating system on the respective user's information processing system. As noted above, the various components include features and options which are selectively installable on a respective user's information processing system. Thus, two different users within the network may have similar but different configurations of the same multitasking operating system. An installation program, which is associated with the base operating system, utilizes the custom install diskette to automatically install all of the features and options selected by the network administrator for the respective user.

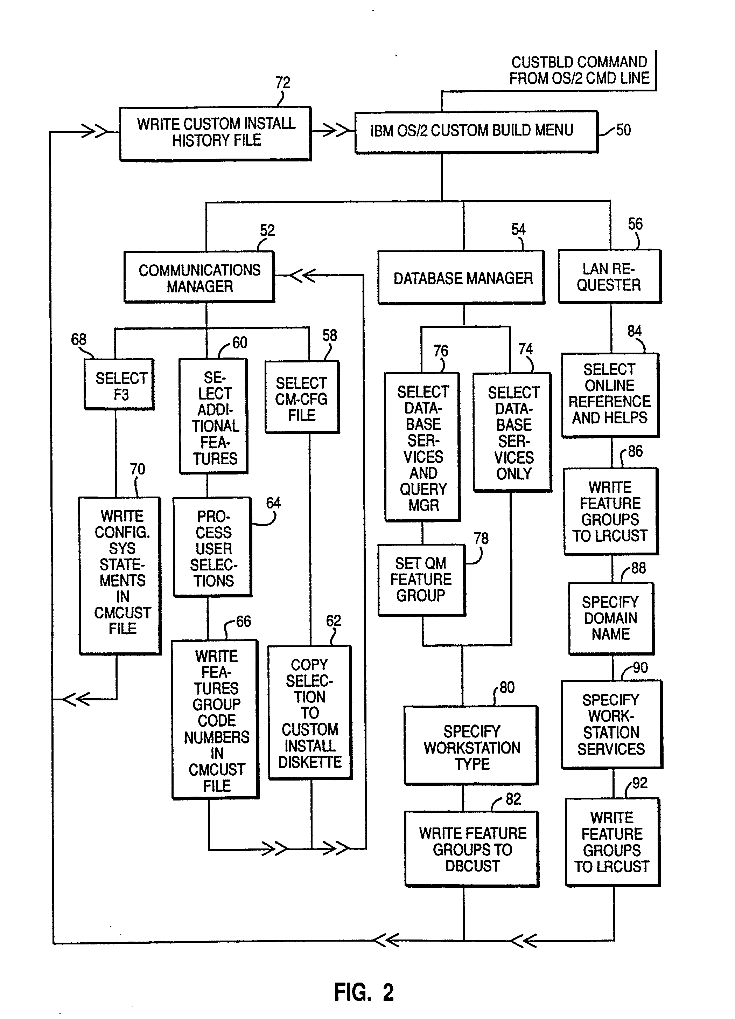

Referring to Fig. 2, there is shown a flow diagram of a custom build process utilized by the network administrator in building the custom install diskette. System 10, in response to a custom build command entered by the network administrator, displays a custom build main menu 50. The custom build main menu 50 enables the network administrator to select one of the plurality of the components 52, 54 or 56 or building a custom file. In response to a first selection of a component from the custom build main menu 50, system 10 requires the network administrator to insert a diskette upon which the custom file will be built. Moreover, the system 10 prompts the network administrator for a target drive for the installation of each component on a user's information processing system. Once the target drive is established, a custom build driver program loads the selected component files and the required code to execute the custom build process. The custom build driver program determines whether a custom install history file presently exists. If the custom install history file does not exists, one is created with all of the necessary variables initialized. Additionally, the custom build program determines whether a custom install file for the selected one of the component 52, 54 and 56 presently exists. If a custom install file for the selected component exists, a warning panel is displayed to the administrator indicating that the selected component was previously custom built and this file will be overwritten is this process continues. If the network administrator chooses to continue, a custom data file, which was previously built, is deleted and the selected component's custom build program is invoked.

There is one exception to this process. If the LAN Requester component 56 was selected, a determination is made as to whether variables associated with either PC Network or Token-Ring are set prior to invoking a custom build program. If either of the variables are set, then the LR custom build program is invoked. If neither of the variables are set, then a message is displayed to the administrator indicating that the communication manager component 52 must be custom built with LAN features prior to the custom building of the LAN Requester component 56.

All errors detected during the custom build process are considered to be critical errors and the custom build process will terminate with an appropriate error panel being displayed to the administrator. Each error must be corrected prior to restarting the custom build process.

A custom install history file will be copied to the custom install diskette. The custom install history file contains the following information which is utilized during a custom install process: communication manager, database manager, LAN Requester target drives for custom install and selected LAN features.

The primary function of the communication manager (CM) custom build program is to build the communication manager custom install file. The communication manager custom program facilitates the display of a "communication manager custom build main menu." Prior to initiating a custom build process for the communication manager, the administrator must build a CM configuration file for the user utilizing the administrator's information processing system. The administrator then selects either a configuration file or files and features option 58 or an additional features and LAN option 60. If the configuration files and features option 58 is selected, all of the communication manager configuration files, which are installed on the administrator's information processing, are displayed thereto. The administrator then selects any of the displayed configuration files to be copied to the custom install diskette in block 62. The copied configuration files will be utilized by the communication manager custom install program to install the configuration files and the referenced feature groups. Additionally, the selected configuration file or files facilitate the updating of the base operating system's CONFIG.SYS file during the custom installation process.

Features group code numbers associated with additional features selected by the administrator in block 64 as a result of the selection of option 60, are written to the custom diskette in block 66.

Subsequent to an exit from the communication manager custom build main menu in block 68, the communication manager custom build program builds generic "Device = " statements which will be used by the CM custom install program. Additionally, the CONFIG.SYS statements are written to the communication manager custom file along with the custom install history file in block 70 and 72, respectively.

The primary function of the database custom build program is to generate data files which are required by the DB custom install program. The database custom build program prompts the administrator to select either database services only in block 74 or database services and query manager in block 76. If the database services and query manager is selected, a query manager feature group is set in block 78. The database manager custom build also prompts the administrator to specify the type of workstation upon which the files are to be installed in block 80. The type of workstation facilitates the loading of the proper drivers and adapters during the installation process. All feature groups are written to a database custom file in block 82.

The primary function of the LAN Requester custom build program is to generate the data files necessary for the LR custom install program. In block 84, the administrator selects online reference and help panel files or feature groups. The selected feature groups are written to the LAN Requester custom file in block 86. In blocks 88 and 90, the administrator is prompted to specify a default domain name and any workstation services. In block 92, the feature groups associated with the workstation services are written to the LAN Requester custom file.

Set out below is an illustration of a build driver application program useable by the system 10 in building a custom diskette. The program is in program design language from which source code and machine code are derivable.

BEGIN CUSTOM BUILD DRIVER PROC
DO UNTIL EXIT KEY ACTIVATED ON CB MAIN MENU

```
DISPLAY THE CB MAIN MENU
GET USER INPUT FROM CB MAIN MENU
IF USER SELECTS A COMPONENT
IF THIS IS THE FIRST SELECTION FROM CB
MAIN MENU
PROMPT USER TO INSERT CB DISKETTE INTO
"A" DRIVE
ENDIF
IF CUSTOM BUILD CM WAS SELECTED
CHECK CB DISKETTE FOR CM CUSTOM DATA
FILE
IF CUSTOM DATA FILE EXISTS
GET HISTORY FILE VARIABLES FROM CUSTOM
DISKETTE
DISPLAY CM CUSTOM FILE EXISTS WARNING
PANEL
IF USER WANTS TO CONTINUE
ERASE CM CUSTOM DATA FILE ON CB DISKETTE
ERASE CM CONFIGURATION FILES ON CB DISKETTE
ENDIF
ENDIF
IF USER WANTS TO CONTINUE WITH CUSTOM
BUILD
INVOKE CM CUSTOM BUILD SUBPROC
IF A LAN FEATURE WAS NOT CUSTOM BUILT
IF LR DATA FILE EXISTS ON CUSTOM DISKETTE
ERASE LR CB DATA FILE
RESET THE LR TARGET DRIVE VARIABLE
ENDIF
ENDIF
SAVE CM INSTALLATION TARGET DRIVE IN CB
HISTORY FILE
SAVE CM LAN FEATURE VARIABLES IN CB HISTORY FILE
SAVE CB HISTORY FILE ON THE CB DISKETTE
ENDIF
ELSE IF CUSTOM BUILD THE DB WAS SELECTED
CHECK CB DISKETTE FOR DB CUSTOM DATA
FILE
IF CUSTOM DATA FILE EXISTS FOR DB
GET HISTORY FILE VARIABLES FROM CUSTOM
DISKETTE
DISPLAY DB CUSTOM FILE EXISTS WARNING
PANEL
IF USER WANTS TO CONTINUE
ERASE DB CUSTOM DATA FILE ON CB DISKETTE
ENDIF
ENDIF
IF USER WANTS TO CONTINUE WITH DB CUSTOM BUILD
INVOKE DB CUSTOM BUILD SUBPROC
SAVE DB INSTALLATION TARGET DRIVE IN CB
DISKETTE HISTORY FILE
```

```
ENDIF
ELSE IF CUSTOM BUILD THE LR WAS SELECTED
GET HISTORY FILE VARIABLES FROM CUSTOM
DISKETTE
IF HISTORY VARIABLES INDICATE PCNET OR
TOKEN RING HAS BEEN CUSTOM BUILT
IF CUSTOM DATA FILE EXISTS FOR LR
DISPLAY LR CUSTOM FILE EXISTS WARNING
PANEL
IF USER WANTS TO CONTINUE
ERASE LR CUSTOM DATA FILE ON CB DISKETTE
ENDIF
ENDIF
IF USE WANTS TO CONTINUE WITH LR CUSTOM BUILD
INVOKE LR CUSTOM BUILD SUBPROC
SAVE LR INSTALLATION TARGET DRIVE IN CB
DISKETTE HISTORY FILE
ENDIF
ENDIF
ENDIF
ENDIF
ENDDO
END CUSTOM BUILD DRIVER PROC
```

Set out below are illustrations of application programs which are called by the custom build driver application program to facilitate the building of the custom diskette. The programs are in program design language from which source code and machine code are derivable.

```
BEGIN CM CUSTOM BUILD SUBPROC
DO UNTIL USER EXITS
DISPLAY CM CB MAIN MENU
GET USER INPUT
IF USER SELECTS CONFIGURATION FILES AND
FEATURES
DISPLAY LIST OF CM-CFG FILES
GET CM-CFG FILE CHOICES
FOR EACH CM-CFG FILE CHOSEN
COPY THE CM-CFG FILE TO THE CB DISKETTE
DETERMINE CM FEATURES CONFIGURED IN
SELECTED CM-CFG FILES
SET THE APPROPRIATE FEATURE FLAG VARIABLES
ENDFOR
ELSE IF USER SELECTED ADDITIONAL FEATURES AND LAN OPTIONS
DISPLAY LIST OF ADDITIONAL CM FEATURES
THAT CAN BE SELECTED
GET CHOICES FROM USER
FOR EACH ADDITIONAL FEATURE SELECTED
SET THE APPROPRIATE FEATURE FLAG VARIABLES
ENDFOR
ENDIF
IF MORE THAT ONE CM-CFG FILE IS ON THE
```

CB DISKETTE
DISPLAY PANEL LISTING ALL SELECTED CM-CFG FILES
PROMPT USER TO SELECT ACTIVE CM-CFG FILE
DETERMINE DEVICE DRIVERS NEEDED FOR THE ACTIVE CM-CFG FILE
ENDIF
CREATE THE CM CUSTOM BUILD DATA FILE
APPEND WORK "FEATURE" TO CM CUSTOM DATA FILE FOR EACH FEATURE TO BE INSTALLED
APPEND APPROPRIATE FEATURE GROUP ID TO THE CM CUSTOM DATA FILE
ENDFOR
APPEND WORK "DEVICE" TO CM CUSTOM DATA FILE FOR EACH DEVICE DRIVER TO BE INSTALLED
APPEND APPROPRIATE DEVICE DRIVER ID TO THE CM CUSTOM DATA FILE
ENDFOR
END CM CUSTOM BUILD SUBPROC
      BEGIN DB CUSTOM BUILD SUBPROC
DO UNTIL ALL OPTIONS CUSTOM BUILT OR USER EXITS
DISPLAY DB CUSTOM BUILD MENU
GET USER INPUT
IF USER SELECTS DS AND QM
GET WORKSTATION TYPE
SET QM OPTION FLAG
ELSE IF USER SELECTS DS
GET WORKSTATION TYPE
ELSE IF USER SELECTS QM
SET QM OPTION FLAG
ENDIF
ENDDO
CREATE DB CUSTOM DATA FILE ON CUSTOM DISKETTE
APPEND WORK "FEATURE: TO DB CUSTOM DATA FILE
APPEND WORKSTATION TYPE TO DB CUSTOM DATA FILE
APPEND QM OPTION FLAG TO THE DB CUSTOM DATA FILE
END DB CUSTOM BUILD SUBPROC
      BEGIN LR CUSTOM BUILD SUBPROC
DISPLAY ONLINE REFERENCE OPTION PANEL
GET USER INPUT
IF USER WANTS ONLINE REFERENCE INSTALLED
SET ONLINE REFERENCE OPTION FLAG
ENDIF
DISPLAY SPECIFY USER DOMAIN PANEL
GET USER INPUT
IF USER SELECTS "MESSENGER SERVICES"
SET LR SERVICES FLAG TO MESSENGER SERVICES ONLY
ELSE IF USER WANTS "MESSENGER SERVICES AND MESSENGER POPUP"
SET LR SERVICES FLAG TO MESSENGER SERVICES AND MESSENGER POPUP
ELSE IF USER WANTS "NEITHER SERVICE"
SET MESSENGER SERVICES FLAG TO "NEITHER SERVICE"
ENDIF
CREATE LR CUSTOM DATA FILE ON CUSTOM DISKETTE
APPEND LR ONLINE REFERENCE FLAG
APPEND LR DOMAIN NAME VARIABLE
APPEND LR SERVICES FLAG
END LR CUSTOM BUILD SUBPROC

After the custom install diskette has been custom built as noted above, a user of the network utilizes the custom install diskette to facilitate the customized installation of the multitasking operating system on the user's information processing system with minimal input from the user.

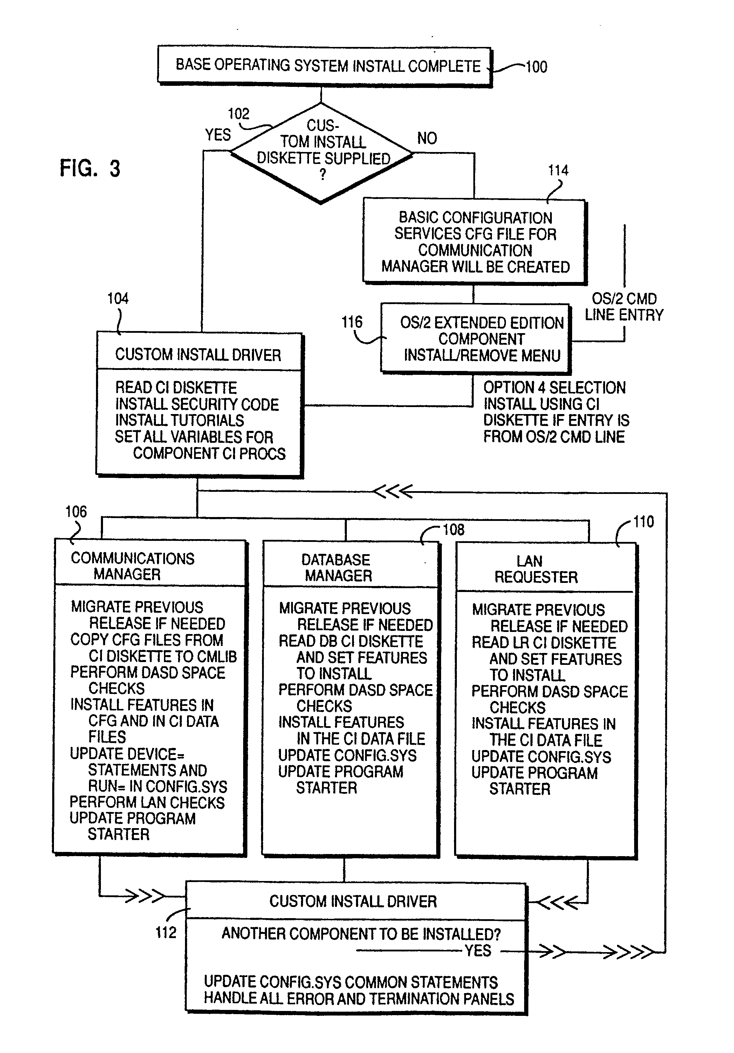

Referring to Fig. 3, there is shown a flow diagram illustrating the steps of a custom install process. Subsequent to the installation of the base operating system in block 100, the user is prompted in block 102 to specify whether the installation will proceed utilizing a custom install diskette. If the custom install process is selected in block 102, the user is prompted to insert the custom install diskette into drive "A" of the user's information processing system. The custom install history file is then read and all of the variables set forth therein are set in block 104. Target drive variables for all of the components on the custom install diskette will be set. Thereafter, the custom install driver program verifies that each target drive specified in the custom install file for each component is a valid drive. If the target drive is not valid, the user is prompted to specify a valid drive and the history file variables are modified to reflect the valid drive.

Moreover, the custom install driver program determines whether the respective component's configuration file exists on the custom install diskette. If the respective component's configuration file is found, it is modified to call its associated custom install program which facilitates the installation of the component's custom files and features. However, prior to calling the selected component, the custom install driver program determines whether the selected component directory structure exists. If a directory structure does exist, the driver program will determine whether a prior release of the component is installed on the system. If the prior release is installed, variables which facilitate the migration of the previous release of the component's code are set. If the component directory does not exist, one is created by the custom install driver program. After all of the custom files have been processed, the respective component's custom install program will automatically terminate with a termination panel.

The primary function of the communication manager custom install program is to install the communication manager system code, panel libraries, features and files from a plurality of original diskettes associated with the multitasking operating system to the appropriate directories with minimal input from the user of the network. The communication manager install program will copy all of the configuration files from the custom install diskette to a \CMLIB file stored in the user's information processing system in block 106. The communication manager install program reads the copied configuration file headers and sets feature variables for the configured features. After the communication manager install program has processed all of the features in the custom install file, the user is prompted to insert specified one of the original diskettes so that the custom features can be installed. After all of the custom features have been installed, the custom install program will process the generic "DEVICE = " statements and update the CONFIG.SYS file as required.

In blocks 108 and 110, a database manager custom install program and a LAN Requester custom install program, respectively, perform task similar to those set forth above in installing the custom features associated with the respective components.

In block 112, the custom install driver program facilitates the display of any error and termination panels as may be required during the installation of the various components.

If a custom diskette is not to be used in the installation of features associated with the various components, the user in block 114 performs the installation of each component separately.

Set out below is an illustration of an install driver application program useable by the system 10 in installing a software program utilizing the a custom install diskette. The program is in program design language from which source code and machine code are derivable.

```
BEGIN CUSTOM INSTALL DRIVER PROC
PERFORM INITIALIZATION
CREATE DIRECTORIES FOR TUTORIALS AND
INSTALL TUTORIALS
UPDATE THE PROGRAM STARTER FOR TUTORIALS
CREATE DIRECTORIES FOR SECURITY AND INSTALL SECURITY CODE
UPDATE PATH/LIBPATH/DPATH CONFIG.SYS
STATEMENTS FOR SECURITY SYSTEM
IF BCS TRIGGER FILE AND CI SET IN TRIGGER
FILE THEN CALL IDXCSINS TO SUBPROC PERFORM CUSTOM INSTALL FUNCTION
GOTO MENU EXIT:
ELSE (NO BCS TRIGGER FILE - REINST FROM
CMD LINE)
DO WHILE (NOT MENU EXIT)
SET UP VALIDITY INDICATORS FOR
INSTALL/REMOVE MENU
    DISPLAY INSTALL/REMOVE MENU
CASE (ENTER)
CASE (CUSTOM INSTALL OPTION SELECTED)
CALL IDXCSINS SUBPROC TO PERFORM CUSTOM
INSTALL FUNCTION
ENDCASE
CASE (F3)
SET MENU EXIT FLAG
ENDCASE
ENDDO
MENU EXIT:
UPDATE PATH/LIBPAT/DPATH CONFIG.SYS
STATEMENTS FOR THE INSTALLED COMPONENTS
LOG INSTALL EXIT IN THE HISTORY FILE
IF (ERROR)
DISPLAY SYSTEM ERROR PANEL
ELSE (NO ERROR)
IF (CONFIG.SYS GETS UPDATED)
DISPLAY SUCCESSFUL COMPLETION PANEL
WITH IPL INSTRUCTION
ELSE (NO CONFIG.SYS UPDATE)
DISPLAY SUCCESSFUL COMPLETION PANEL
ENDIF
ENDIF
END CUSTOM INSTALL DRIVER PROC
```

Set out below are illustrations of application programs which are called by the install driver application program to facilitate the installation of the software program utilizing the custom install diskette. The programs are in program design language from which source code and machine code are derivable.

```
BEGIN IDXCSINS SUBPROC
PROMPT USER TO INSERT CI DISKETTE
ACCESS CI DISKETTE FOR CI TARGET DRIVES
SPECIFICATIONS FOR EACH COMPONENT
IF CM CUSTOM INSTALL FILE ON CI DISKETTE
THEN CALL IDXCMINS TO INSTALL CM
IF PC NETWORK, TOKEN-RING, OR ELANPLUS
WAS INSTALLED
IF LR CUSTOM INSTALL FILE EXISTS ON CI
DISKETTE
THEN
CALL IDXLRINS TO INSTALL LR
ENDIF
ENDIF
ENDIF
IF DB CUSTOM INSTALL FILE EXISTS ON CI
DISKETTE THEN CALL IDXDBINS TO INSTALL
DB
ENDIF
END IDXCSINS SUBPROC
```

BEGIN IDXCMINS PROC
DETERMINE INSTALL STATUS TO BE MIGRATE INSTALL, NEW INSTALL OR RE- INSTALL AND SET VARIABLES
CALL IDXGTDRV TO VERIFY THE TARGET DRIVE SPECIFICATION
MAKE DIRECTORIES FOR CM
CALL CM CUSTOM INSTALL PROC
DELETE CUSTOM INSTALL FILES FOR CM
END IDXCMINS PROC
BEGIN IDXLRINS PROC
DETERMINE INSTALL STATUS TO BE MIGRATE INSTALL, NEW INSTALL OR RE- INSTALL AND SET VARIABLES
CALL IDXGTDRV TO VERIFY THE TARGET DRIVE SPECIFICATION
MAKE DIRECTORIES FOR LR
CALL LR CUSTOM INSTALL PROGRAM
DELETE CUSTOM INSTALL FILES FOR LR
END IDXLRINS PROC
BEGIN IDXDBINS PROC
DETERMINE INSTALL STATUS TO BE MIGRATE INSTALL, NEW INSTALL OR RE-INSTALL AND SET VARIABLES
CALL IDXGTDRV TO VERIFY THE TARGET DRIVE SPECIFICATION
MAKE DIRECTORIES FOR DB
CALL DB CUSTOM INSTALL PROGRAM
DELETE CUSTOM INSTALL FILES FOR DB
END IDXDBINS PROC
BEGIN IDXGTDRV PROC
DO UNTIL (TARGET DRIVE IS VALID)
VERIFY THE TARGET DRIVE EXISTS ON THE USER MACHINE AND IS A FIXED DISK
IF (TARGET DRIVE SPECIFIED AT CUSTOM INSTALL TIME IS INVALID) THEN
SET DEFAULT TARGET DRIVE = C:
ELSE
DISPLAY "TARGET DRIVE SPECIFICATION" PANEL
ENDIF
ENDDO
END IDXGTDRV PROC

Set out below are illustrations of application programs which are called by a plurality of install driver procedures application programs to facilitate the installation of the various components of the software program utilizing the custom install diskette. The programs are in program design language from which source code and machine code are derivable.

BEGIN CM CUSTOM INSTALL PROC
LOG COMMUNICATIONS MANAGER CUSTOM INSTALL IN THE HISTORY FILE
IF FIRST INSTALL THEN
CHECK FOR OVERALL DASD SPACE
ELSE

IF CM MIGRATE REQUIRED (PREVIOUS RELEASE EXISTS)
THEN
DISPLAY "REMOVE PREVIOUS RELEASE OF COMMUNICATION MANAGER"
CHECK FOR OVERALL DASD SPACE
ENDIF
ENDIF
COPY CM-CFG FILES FROM CI DISKETTE TO \CMLIB DIRECTORY
SET UP FEATURE VARIABLES FROM THE CONFIGURATION FILE HEADERS
READ CM CUSTOM DATA FILE
DO WHILE (NOT EOF)
IF (KEYWORD = FEATURE) THEN
READ NEXT LINE FROM CUSTOM DATA FILE
SET APPROPRIATE FEATURE VARIABLE
ELSE
IF (KEYWORD = DEVICE) THEN
READ NEXT LINE FROM CUSTOM DATA FILE
SET APPROPRIATE ADAPTER VARIABLE
IF DEVICE = STATEMENT NEEDS A CM-CFG FILE NAME
THEN
READ NEXT LINE FROM CUSTOM DATA FILE
SET APPROPRIATE CONFIG FILE NAME VARIABLE
ENDIF
ENDIF
ENDIF
ENDDO
UNPACK APPROPRIATE FEATURE GROUP CODES ACCORDING TO FEATURE VARIABLES SET
CHECK MACHINE TYPE VARIABLE TO ENSURE THE APPROPRIATE FEATURES ARE UNPACKED
SET APPROPRIATE DEVICE = STATEMENTS IN THE CONFIG.SYS FILE
CHECK MACHINE TYPE FOR APPROPRIATE DEVICE DRIVERS TO BE SET IN CONFIG.SYS
SET APPROPRIATE RUN = STATEMENTS IN THE CONFIG.SYS
IF NOT CM RE-INSTALL THEN
ADD CM TO THE PROGRAM STARTER LIST
ENDIF
END CM CUSTOM INSTALL PROC
BEGIN DB CUSTOM INSTALL PROC
LOG DATABASE MANAGER CUSTOM INSTALL IN THE HISTORY FILE
IF DB MIGRATE REQUIRED (PREVIOUS RELEASE EXISTS) THEN
DISPLAY "REMOVE PREVIOUS RELEASE OF DATABASE MANAGER"
ENDIF
READ DB CUSTOM DATA FILE
IF DS SPECIFIED THEN
IF OM SPECIFIED THEN
CALL DBDSGWSN FOR WORKSTATION NAME

```
CHECK DASD SPACE FOR DS AND QM
CALL DBDSINST TQ INSTALL DS
CALL DBQMINST TO INSTALL QM
ELSE
IF QM SPECIFIED THEN
CALL DBDSGWSN FOR WORKSTATION NAME
CHECK DASD SPACE FOR QM ONLY
CALL DBDSINST TO INSTALL QM
ENDIF
ENDIF
ENDIF
LOG COMPLETION ENTRY IN HISTORY FILE
END DB CUSTOM INSTALL PROC
    BEGIN DBDSBWSN PROC
DO UNTIL (WORKSTATION NAME IS VALID)
DISPLAY "WORKSTATION NAME" POPUP
ENDDO
END DBDSBWSB PROC
    BEGIN DBDSINST PROC
UNPACK APPROPRIATE DS FEATURE GROUP
CODE
IF CM IS INSTALLED THEN
INSTALL APPC/LPO CODE
ENDIF
ADD LOG = ON STATEMENT IN THE CONFIG.
SYS FILE
IF DB MIGRATE REQUIRED THEN
DISPLAY "DATABASE MIGRATION MESSAGE"
PANEL AND MIGRATE DATABASES
ENDIF
END DBDSINST PROC
    BEGIN DBQMINST PROC
UNPACK APPROPRIATE QM FEATURE GROUP
CODE
ADD QM TITLE TO THE PROGRAM SELECTOR
LIST
ADD SET = STATEMENTS IN THE CONFIG.SYS
FILE
END DBQMINST PROC
    BEGIN LR CUSTOM INSTALL PROC
LOG LAN REQUESTER CUSTOM INSTALL ENTRY IN THE HISTORY FILE
IF LR MIGRATE INSTALL REQUIRED THEN
DISPLAY "REMOVE PREVIOUS RELEASE OF
LAN REQUESTER" POPUP
ENDIF
READ LAN REQUESTER CUSTOM DATA FILE
IF INSTALL STATUS = NEW INSTALL THEN
CHECK FOR DASD SPACE
ENDIF
DO UNTIL (REQUESTER NAME IS VALID AND
DIFFERENT FROM DOMAIN NAME)
DISPLAY "REQUESTER NAME ENTRY" PANEL
ENDDO
BACK UP IBMLAN.INI AS NECESSARY
IF (LR BASE SYSTEM CODE NEEDS TO BE INSTALLED) THEN
UNPACK THE BASE SYSTEM FILES
```

```
UNPACK THE .DLL FILES
IF (ERROR FROM UNPACKING .DLL FILES)
THEN
UNPACK THE BASE SYSTEM FILES
RUN COMMAND FILE TO APPEND/CREATE
DDITEMP.DDP FILE
ENDIF
ENDIF
IF (ONLINE REFERENCE AND HELP FILES NEED
TO BE INSTALLED) THEN
UNPACK THE ONLINE REFERENCE AND HELP
FILES
ENDIF
IF (LR BASE SYSTEM CODE IS INSTALLED)
THEN
UPDATE THE IBMLAN. INI FILE
UPDATE THE CONFIG.SYS FILE
ADD ENTRIES TO THE PROGRAM STARTER
LIST
ENDIF
LOG COMPLETION ENTRY IN THE HISTORY
FILE
END LR CUSTOM INSTALL PROC
```

In summary, a multitasking operating system includes a base operating system and communication, database and LAN components as an integral part thereof. Each of the various components includes a plurality of separately installable features and options. An administrator of a computer network which utilizes the multitasking operating system, utilized a custom build program to build a custom install diskette for one or more of a plurality of users of the network. Each of the users of the network may require a different combination of the various components as well as a different combination of the features and options associated therewith. For a selected one of the users, the administrator selects each component and the features and options associated therewith which is to be installed on an information processing system associated with the selected one of the users. Subsequent to the selection of each of the components and features and options associated therewith, the custom build program creates the necessary files on the diskette to facilitate the subsequent installation of the selected components' features and options on the selected one of the users system. The files on the custom install diskette are generic for the target information processing system. The custom install program queries the installation program associated with the base operating to determine the type of machine on which the component, features and options are to be installed. Thereafter, only the code for the type of information processing system provided by the installation program will be installed thereon and the CONFIG.SYS file will be updated to reflect the type of information processing system.

After the custom install diskette is complete, the selected one of the users utilizes this diskette along with the original diskettes associated with the multitasking operating system to perform a custom installation of the operating system on the user's information processing system. This process simplifies the installation process and requires limited input from the user thereby reducing the level of knowledge required by the user to install the operating system and installation errors normally associated therewith.

At least preferred embodiments of the invention provide a way of installing software whereby installation errors and installation time are reduced and the user of the multitasking operating system is not required to be familiar with the various installation programs associated with the various components thereof.

While the invention has been particularly shown and described with reference to a preferred embodiment, it will be understood by those skilled in the art that various changes in form and detail may be made without departing from the scope of the invention.

## Claims

1. A method of installing software including a base system and a plurality of separately installable components, on an information processing system (10), comprising the steps of:
determining, from a custom install diskette, which of said components have been selected for installation on said information processing system; and
installing, for each of said selected components, features and options specified on said custom install diskette on said information processing system.

2. A method as claimed in claim 1 further including the step of updating a configuration file associated with said base system in response to the installed components, features and options.

3. A method as claimed in any of claims 1 or 2 further including the steps of:
installing said base system; and
utilizing an installation program associated with said base system to perform the installation of each of said selected components.

4. A method as claimed in any of claims 1, 2 or 3 wherein said installing step includes the step of separately invoking a component install program which is associated with a selected one of the components.

5. A method as claimed in claim 4 wherein said invoked component install program generates a plurality of generic files associated with said selected component, features and options.

6. A method as claimed in claim 5 further including the step of determining a machine type associated with said information processing system.

7. A method as claimed in claim 6 wherein only code which is associated with the selected component, specified features and options and machine type is installed on said information processing system.

8. A method as claimed in claim 7 further including the step of generating said custom install diskette.

9. A method as claimed in any preceding claim, where said software is a multitasking operating system and said base system is a base operating system.

10. An information processing system having means for installing software including a base system and a plurality of separately installable components, comprising a data reading device (26) for reading said components, control logic (12,14,16,18) for determining, from a custom install diskette, which of said components have been selected for installation on said information processing system; and
file loading logic (12,14,16,18) for installing, for each of said selected components, features and options specified on said custom install diskette on said information processing system.

11. An information processing system as claimed in claim 10 having means for updating a configuration file associated with said base system in response to the installed components, features and options.

FIG. 1

FIG. 2

**FIG. 3**

BASE OPERATING SYSTEM INSTALL COMPLETE — 100

102 — CUS-TOM INSTALL DISKETTE SUPPLIED ?

YES

NO

114 — BASIC CONFIGURATION SERVICES CFG FILE FOR COMMUNICATION MANAGER WILL BE CREATED

OS/2 CMD LINE ENTRY

104 — CUSTOM INSTALL DRIVER

READ CI DISKETTE
INSTALL SECURITY CODE
INSTALL TUTORIALS
SET ALL VARIABLES FOR COMPONENT CI PROCS

116 — OS/2 EXTENDED EDITION COMPONENT INSTALL/REMOVE MENU

OPTION 4 SELECTION
INSTALL USING CI DISKETTE IF ENTRY IS FROM OS/2 CMD LINE

106 — COMMUNICATIONS MANAGER

MIGRATE PREVIOUS RELEASE IF NEEDED
COPY CFG FILES FROM CI DISKETTE TO CMLIB
PERFORM DASD SPACE CHECKS
INSTALL FEATURES IN CFG AND IN CI DATA FILES
UPDATE DEVICE= STATEMENTS AND RUN= IN CONFIG.SYS
PERFORM LAN CHECKS
UPDATE PROGRAM STARTER

108 — DATABASE MANAGER

MIGRATE PREVIOUS RELEASE IF NEEDED
READ DB CI DISKETTE AND SET FEATURES TO INSTALL
PERFORM DASD SPACE CHECKS
INSTALL FEATURES IN THE CI DATA FILE
UPDATE CONFIG.SYS
UPDATE PROGRAM STARTER

110 — LAN REQUESTER

MIGRATE PREVIOUS RELEASE IF NEEDED
READ LR CI DISKETTE AND SET FEATURES TO INSTALL
PERFORM DASD SPACE CHECKS
INSTALL FEATURES IN THE CI DATA FILE
UPDATE CONFIG.SYS
UPDATE PROGRAM STARTER

CUSTOM INSTALL DRIVER

112 — ANOTHER COMPONENT TO BE INSTALLED? —————— YES

UPDATE CONFIG.SYS COMMON STATEMENTS
HANDLE ALL ERROR AND TERMINATION PANELS